# EUROPÄISCHE PATENTANMELDUNG

(11) **EP 1 045 278 A2**
(43) Veröffentlichungstag der Anmeldung: **18.10.2000**
(21) Anmeldenummer: 00107136.4
(22) Anmeldetag: 07.04.2000
(51) Int. Cl.: G03B 17/24

(54) **Verfahren zum Aufbringen von Daten auf einen photographischen Film**

(30) Priorität: 14.04.1999 DE 19916793
(71) Anmelder: ROBOT FOTO UND ELECTRONIC GmbH, D-40597 Düsseldorf (DE)
(72) Erfinder: Behrens, Andreas, 40764 Langenfeld (DE)
(74) Vertreter: Weisse, Jürgen, Dipl.-Phys.

(57) **Zusammenfassung**

Zum Aufbringen von Zeit- und/oder Meßdaten bei photographischen Verkehrsüberwachungs-Anlagen auf einem photographischen Film (18) in einer durch ein Lesegerät zur Verarbeitung in einen Rechner lesbaren Form wird auf dem photographischen Film (18) zusätzlich zu einer alphanumerischen Darstellung (38) der Daten ein Feld (40) aufgebracht, in welchem die Daten in einer durch das Lesegerät und den Rechner vereinfacht lesbaren Form dargestellt ist.

## Beschreibung

Die Erfindung betrifft ein Verfahren zum Aufbringen von Daten auf einem photographischen Film, insbesondere von Zeit- und/oder Meßdaten bei photographischen Verkehrsüberwachungs-Anlagen, in einer durch ein Lesegerät zur Verarbeitung in einen Rechner lesbaren Form.

Bei photographischen Verkehrsüberwachungs-Anlagen wird eine Übertretung der Verkehrsregeln durch eine photographische Kamera dokumentiert. Die photographische Kamera zeigt eine Verkehrsszene mit dem überwachten Fahrzeug. Weiterhin fallen Daten an, z.B. Ort und Zeit der Aufnahme und die gemessene Geschwindigkeit des Fahrzeugs. Auch diese Daten müssen beweiskräftig dokumentiert werden. Das geschieht in der Weise, daß die Daten in die photographische Aufnahme eingespiegelt oder sonstwie photographisch aufgebracht werden.

Bei einer bekannten photographischen Kamera (DE 30 34 161 C2) ist im Bereich eines Filmrandes ein mit einer Leuchtdioden-Matrix aufgebauter photographischer Schreibkopf vorgesehen. Der Schreibkopf erzeugt während des Filmtransportes nacheinander alphanumerische Zeichen, die so als Schrift auf den Filmrand aufgetragen werden. Auf diese Weise können die zu dokumentierenden Daten photographisch auf den Filmrand geschrieben werden.

Solche photographischen Aufnahmen auf dem Film sind manipulationssicher. Sie werden daher in gerichtlichen Verfahren als Beweismittel anerkannt.

Es ist weiter bekannt, die mit einer Verkehrsüberwachungs-Anlage gemachten photographischen Aufnahmen mittels eines "Scanners" abzutasten und in ein "digitales Bild" umzusetzen. Dabei wird für jedes Bildelement (Pixel) ein Helligkeitswert in digitaler Form erzeugt. Zu diesem Zweck wird das Bild auf dem photographischen Film auf einem bildauflösenden Sensor abgebildet, der entweder eine zweidimensionale Anordnung von Sensorelementen enthält oder eine Zeile von Sensorelementen, mittels welcher das Bild zeilenweise abgetastet wird. Solche "digitalen Bilder" können dann einer Bildverarbeitung unterworfen werden, beispielsweise um das Kennzeichen eines aufgenommenen Kraftfahrzeugs automatisch zu lesen.

Gelesen werden müsen dabei auch die eingespiegelten oder sonstwie auf dem Rand des Films aufgebrachten Daten. Es gibt Bildverarbeitungs-Programme, welche es einem Rechner ermöglicht, eine als Bild Bildpunkt für Bildpunkt abgetastete Schrift zu "lesen", d.h. in die den verschiedenen Buchstaben entsprechenden Codewörter umzusetzen. In der Praxis bietet dieses Lesen der kleinen, auf dem Filmrand aufgebrachten Zeichen Schwierigkeiten. Es treten Lesefehler auf Solche Lesefehler stellen aber die Funktionsfähigkeit des ganzen Systems in Frage, da es sich um Daten wie die gemessene Geschwindigkeit bei einer Verkehrsüberwachungs-Anlage handelt, die für den Erlaß eines Bußgeldbescheides oder eine Strafverfolgung des Fahrers in hohem Maße relevant sind. Es ist versucht worden, zusätzlich zu den Daten eine Prüfsumme aufzubringen, welche auf Lesefehler hinweisen soll. Damit werden Lesefehler aber nicht vermieden. Es kann allenfalls erreicht werden, daß falsch gelesene Aufnahmen aus der weiteren Bearbeitung herausfallen.

Der Erfindung liegt die Aufgabe zugrunde, das Lesen von Daten, die auf einen photographischen Film aufgebracht werden, sicherer zu machen.

Erfindungsgemäß wird diese Aufgabe bei einem Verfahren der eingangs genannten Art dadurch gelöst, daß auf dem photographischen Film zusätzlich zu einer alphanumerischen Darstellung der Daten ein Feld aufgebracht wird, in welchem die Daten in einer durch das Lesegerät und den Rechner vereinfacht lesbaren Form dargestellt ist.

Die Daten werden somit einmal in einer durch den Menschen lesbaren Form als Buchstaben und Zahlen auf den Film aufgebracht. Zusätzlich werden die Daten aber auch in einer Form aufgebracht, in welcher sie durch einen Rechner mit einem Lesekopf leichter und sicherer gelesen werden können als dies mit den üblichen Zeichenerkennungs-Programmen möglich ist. Damit wird das Lesen dieser Daten nicht nur vereinfacht, es wird auch sicherer. Lesefehler können praktisch ausgeschlossen werden.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert
- Fig. 1: ist eine schematische Darstellung einer photographischen Kamera und der Einrichtung zum photographischen Aufbringen von abtastbaren Datendarstellungen auf den Filmrand eines photographischen Filmes.
- Fig.2: zeigt eine mit der Vorrichtung von Fig. 1 aufgebrachte Datendarstellung.
- Fig.3: ist ein Blockdiagramm und veranschaulicht den Schreibkopf.
- Fig.4: ist ein Diagramm und veranschaulicht die Wirkungsweise des Schreibkopfes.
- Fig.5: ist ein Diagramm und veranschaulicht den Vorgang des Lesens der Daten mittels eines 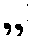 Scanners".

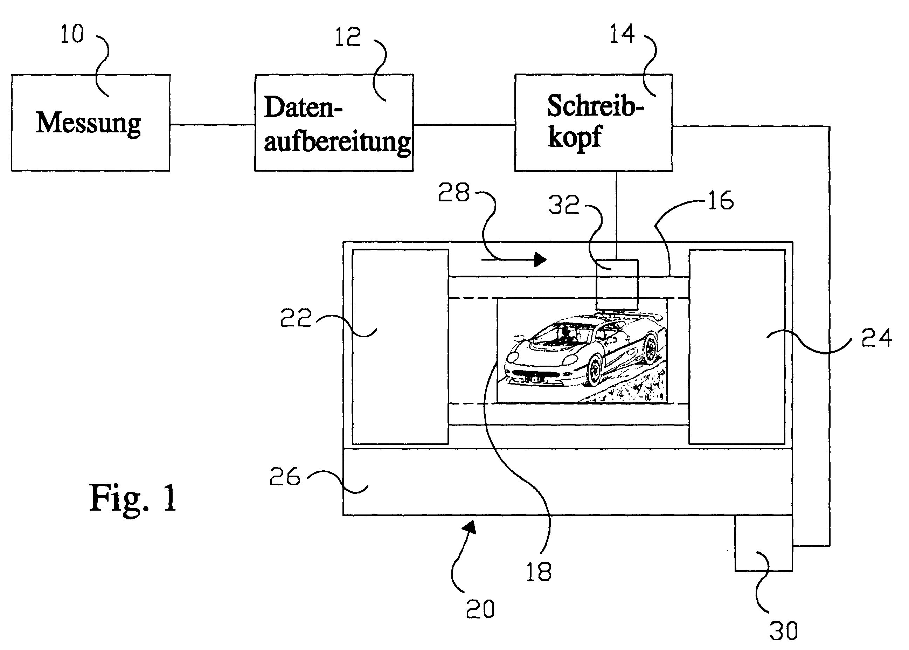

In Fig. 1 ist mit 10 eine Meßeinrichtung einer die Geschwindigkeit von Fahrzeugen überwachenden Verkehrsüberwachungs-Anlage bezeichnet. Die Meßeinrichtung liefert Daten. Diese Daten sind einmal die gemessenen Geschwindigkeiten. Zum anderen liefert die Meßeinrichtung Zeitinformationen, also Datum und Uhrzeit. Andere Daten können etwa der Ort sein, an welchem die Verkehrsüberwachungs-Anlage installiert ist. Diese Daten werden in einer Datenaufbereitungs-Einrichtung 12 aufbereitet. Die Datenaufbereitungs-Einrichtung 12 erzeugt Signale zur Ansteuerung einer Leuchtdioden-Matrix eines Schreibkopfes 14. Über den Schreibkopf 14 werden Datendarstellungen auf den Rand 16 eines Filmes 18 in einer photographischen Kamera 20 eingespiegelt. Die photographische Kamera 20 nimmt, wie angedeutet, auf dem Mittelteil des Films 18 eine Verkehrsszene mit einem zu überwachenden Fahrzeug auf Auf dem Rand 16 werden von dem Schreibkopf 14 ebenfalls photographisch, also durch Belichtung einer lichtempfindlichen Emulsion, Datendarstellungen zugehöriger Daten, also z.B. von Geschwindigkeit, Datum und Uhrzeit, aufgebracht.

Mit 22 und 24 sind Vorrats- bzw. Aufwickelspule der Kamera 20 bezeichnet. Der Film 18 wird nach jeder Aufnahme der Verkehrsszene von einem Filmantriebsmotor 26 von der Vorratsspule22 abgezogen und auf die Aufwickelspule 24 aufgewickelt. Es erfolgt somit nach jeder Aufnahme ein Filmtransport in einer durch einen Pfeil 28 dargestellten Filmtransportrichtung. Während dieses Filmtransports erfolgt das Aufbringen der Datendarstellung auf den Rand 16 des Films.

Zu diesem Zweck erhält der Schreibkopf 14 von einem mit dem Filmantriebsmotor 26 gekoppelten Impulsgeber 30 eine Impulsfolge, welche die Bewegung des Films 18 während des Filmtransportes wiedergibt. Jedem Impuls entspricht ein Weginkrement des Films. Die Impulsfolge steuert den Schreibkopf 14 derart, daß die Leuchtdioden-Matrix macheinander eines der von der Datenaufbereitungs-Einheit 12 bereitgestellten Zeichen darstellt. Diese Zeichen oder diese Datendarstellungen werden dann mittels einer Einspiegelungs-Vorrichtung 32 während des Filmtransportes nacheinander auf den Rand 16 des Filmes eingespiegelt.

Die Anordnung kann im wesentlichen so aufgebaut sein, wie es in der oben erwähnten DE 30 34 161 C2 dargestellt und beschrieben ist.

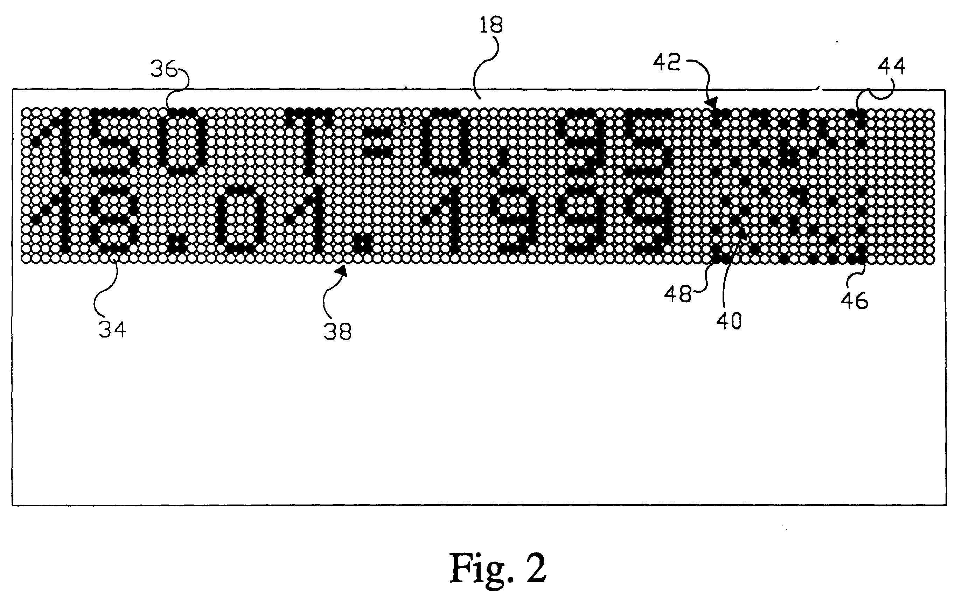

In Fig.2 ist ein Beispiel einer auf diese Weise erzeugten Datendarstellung.

Das in Fig.2 erkennbare Raster von kleinen Kreisen, z.B. 34, entspricht dem Raster von Leuchtdioden in der Leuchtdioden-Matrix des Schreibkopfes 14. Wenn eine Leuchtdiode der Leuchtdioden-Matrix angesteuert ist und leuchtet, wird der Rand 16 des Films 18 an dieser Stelle geschwärzt, wie z.B. bei 36 dargestellt ist. Durch geeignete Ansteuerung der Leuchtdioden können auf diese Weise Zeichen oder andere Datendarstellungen auf dem Rand 16 des Films 18 erzeugt werden. Bei der DE 30 34 161 C2 ist die Leuchtdioden-Matrix eine zweidimensionale Anordnung von Leuchtdioden, durch welche jeweils ein vollständiges Zeichen, z.B. eine "1" oder ein "T", in einem zugehörigen Feld dargestellt werden kann. Stattdessen können auch eindimensionale Anordnungen von Leuchtdioden vorgesehen sein, die nacheinander die einzelnen Spalten des Feldes "schreibt".

In Fig.2 sind die Daten, hier Geschwindigkeit, Zeit und Datum, durch Leuchtdioden-Punkte in einem Bereich 38 in einer für den Menschen ohne weiteres lesbaren alphanumerischen Schrift eingespiegelt und auf den Film photographisch aufgebracht. Zusätzlich ist aber ein Feld 40 vorgesehen, in welchen die Daten in einer Form dargestellt sind, die bei einer späteren Abtastung mittels eines "Scanners" von dem Scanner und einem Rechner auf einfache Weise und ohne Lesefehler gelesen werden kann.

Das Feld 40 ist rechteckig. Die Ecken des Feldes 40 sind durch vier Sätze 42, 44, 46 und 48 von jeweils drei, einen rechten Winkel darstellenden geschwärzten Punkten unabhängig von den darzustellenden Daten markiert. Innerhalb dieses Rechtecks sind Punkte definiert, die in Fig.2 bestimmten Kreisen 34 des Rasters entsprechen. Die Schwärzung oder Nichtschwärzung dieser Punkte liefert datenabhängige Informationen. Diese Informationen sind von einem Rechner mit Lesekopf leichter zu lesen als die alphanumerische Darstellung im Bereich 38. Die Datendarstellung kann in dem Feld 40 mehrfach-redundant vorgesehen werden, da sie wenig Fläche benötigt. Das erhöht die Sicherheit der Auslesung.

Bei der beschriebenen Art der Datendarstellung werden die belichteten Punkte auf den Rand 16 des Films 18 während des Filmtransports, also bei der Bewegung des Films aufgebracht. Die relative Lage der Punkte zueinander ist daher von der Geschwindigkeit des Filmtransports abhängig und nicht so genau definiert wie etwa beim Aufbringen von Marken auf Papier durch einen Druckvorgang. Das Rechteck kann in Richtung des Filmtransports je nach der Geschwindigkeit des Filmtransports etwas länger oder kürzer als ein Nominalwert sein. Das kann beim Lesen durch einen Lesekopf u.U. zu Fehlern führen. Auch die Spaltenabstände der Leuchtdioden-Matrix können von Kamera zu Kamera verschieden sein.

Aus diesem Grunde wird beim Auslesen der Daten aus dem Feld 40 wie folgt vorgegangen:

Aus dem Abstand der der durch die Sätze 42 und 44 von geschwärzten Punkten markierten Ecken des Rechtecks wird die Seitenlänge des Rechtecks in Filmtransportrichtung 28 bestimmt. Die Koordinaten der in dem Feld definierten, auf Schwärzung oder Nichtschwärzung zu prüfenden Punkte werden nicht von vornherein festgelegt sondern aus der so bestimmten Seitenlänge ermittelt. Sind in dem Rechteck m Spalten vorgesehen, dann wird die Seitenlänge S durch m geteilt. Das ergibt den Spaltenabstand. Ein Punkt in der n-ten Spalte hat dann die Abszisse nS/m. An dieser Stelle wird der Zustand "Geschwärzt" oder "Nicht-geschwärzt" geprüft.

Ein ähnliches Verfahren kann auch zu Bestimmung der "Ordinaten" der Punkte senkrecht zur Filmtransportrichtung angewandt werden, um Toleranzen in der Höhe der Leuchtdioden-Matrix oder in der Länge der Leuchtdioden-Zeile zu berücksichtigen, die von Kamera zu Kamera unterschiedlich sein können.

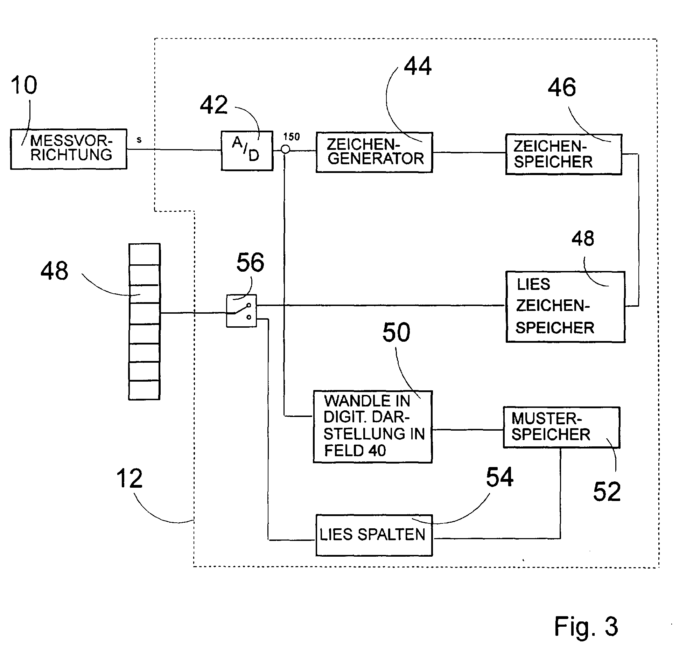

Fig.3 ist ein Blockdiagramm und zeigt die Aufzeichnung der Meßwerte auf dem Rand 16 des Films 18, wie dies in Fig.2 dargestellt ist.

In Fig.3 ist mit 10 wieder die Meßvorrichtung bezeichnet. Der Meßwert wie eine Geschwindigkeit s ist auf einen Analog-Digital-Wandler 42 aufgeschaltet. Der Analog-Digital-Wandler 42 liefert ein digitales Signal, beispielsweise in ASCII-Code, welches auf einen Zeichengenerator 44 aufgeschaltet ist. Der Zeichengenerator 44 erzeugt aus dem digitalen Eingang ein Muster von binären Zuständen die, wenn sie sichtbar dargestellt werden, das Zeichen in einer vom Menschen lesbaren Form darstellen. Praktisch ist dieser Zeichengenerator ein ROM, der durch die digitalen Eingangsdaten adressiert wird und ein Muster von binären Zeilen- und Spaltensignalen liefert. Dieses Muster wird in einem Zeichenspeicher 46 gespeichert. Der Zeichenspeicher 46 wird dann spaltenweise durch Lesemittel ausgelesen. Die 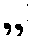 Spalten" von binären Signalen werden dann nacheinander auf eine lineare Anordnung 48 von Leuchtdioden aufgeschaltet. Dadurch werden die Leuchtdioden der Anordnung in aufeinanderfolgenden Mustern so angesteuert, daß bei der Vorbeibewegung des Films 18 an den Leuchtdioden der linearen Anordnung 48 oder ihrer Bilder beim Filmvorschub die gespeicherten Zeichen auf dem Rand 16 des Filmes 18 aufgezeichnet werden.

Der digitale Ausgang des Analog-Digital-Wandlers 42 ist auch auf einen Wandler 50 aufgeschaltet, welcher die digital codierten Meßwerte in ein in Feld 40 (Fig.2) sichtbar zu machendes Muster umsetzt. Dieses Muster enthält Spalten von binären 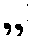 Eins"- und 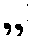 Null"-Signalen, welche auch den Meßwert darstellen, dies aber in einer Form tun, die ein leichteres und zuverlässigeres Auslesen durch einen 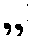 Scanner" und Rechner gestattet als die vom Menschen lesbaren Zeichen in Feld 38. Beispielsweise kann der Geschwindigkeits-Meßwert 150 (km/h) in einfach binärer Form dargestellt werden, was sich als 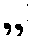 10010110" lesen ließe. Stattdessen könnten auch die ASCII-Codes der Ziffern 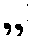 1", 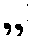 5" und 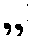 0" dargestellt und in aufeinanderfolgenden 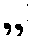 Spalten" in dem Musterspeicher 52 gespeichert werden. Wenn das Feld 40 zu beschreiben ist, werden die Spalten des Musterspeichers 52 spaltenweise ausgelesen, wie durch Block 54 in Fig.3 dargestellt ist. Jetzt werden die binären Signale des Spalten nacheinander auf die Anordnung 48 von Leuchtdioden aufgeschaltet. Die Umschaltung von Feld 38 auf Feld 40 und der zugehörigen Darstellung des Meßwertes ist durch einen Schalter 56 symbolisiert. Dadurch wird das Muster auf den Rand 16 des Films 18 in der gleichen Weise übertragen wie die Zeichen von Feld 38.

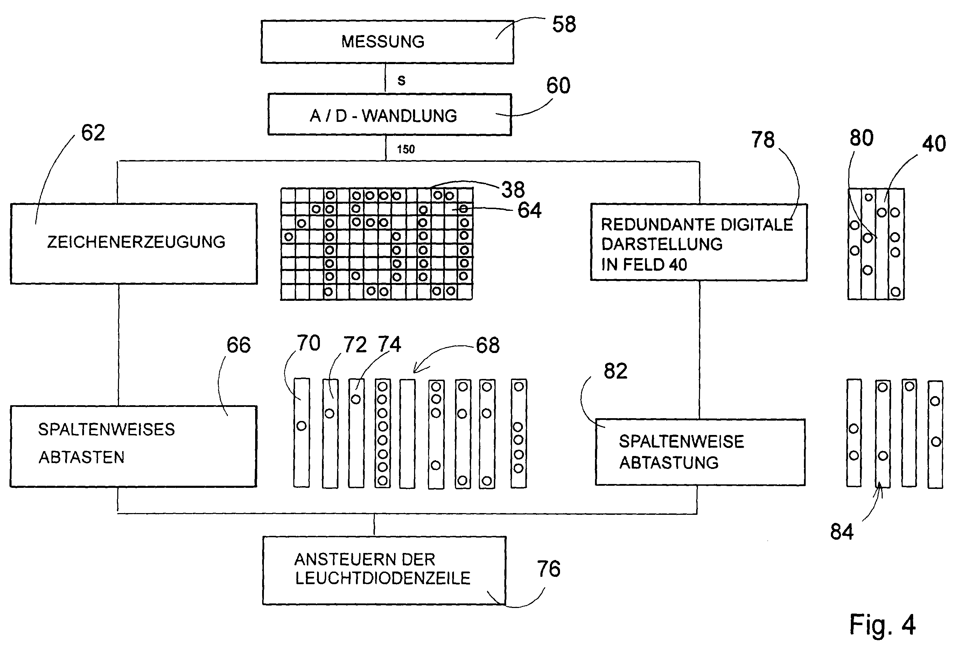

Fig.4 zeigt auf eine etwas andere Weise die Betriebsweise der Signalverarbeitungs-Einrichtung der Figuren 1 und 3.

In Fig.4 stellt ein Block 58 die Messung dar. Die Messung liefert einen Meßwert, z.B. die Geschwindigkeit 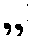 s". Der Meßwert wird in eine digitale Darstellung wie 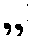 150" im ASCII-Code umgesetzt. Das ist durch Block 60 in Fig.4 dargestellt. Die digitale Darstellung wird auf zwei Wegen verarbeitet:

Im linken Teil von Fig.4 werden die vom Menschen lesbaren Zeichen entsprechend der digitalen Darstellung erzeugt. Das ist durch Block 62 in Fig.4 dargestellt. Die Zeichen werden erzeugt in Form einer Matrix von binären Einsen und Nullen, wie schematisch bei 64 dargestellt ist. Die schwarzen Punkte stellen binäre Einsen und die leeren Felder binäre Nullen dar. Die auf diese Weise erzeugten und im Zeichenspeicher 48 gespeicherten Zeichen werden dann spaltenweise abgetastet. Das ist durch Block 66 dargestellt. Die nacheinander ausgelesenen Spalten sind bei 68 dargestellt. Die lineare Anordnung 48 von Leuchtdioden wird nach Maßgabe der Spalten 68 angesteuert, d.h. während eines ersten Taktintervalls wird die Leuchtdiode 70 der ersten Spalte zum Leuchten gebracht, in dem zweiten und dritten Taktintervall werden die Dioden 72 bzw. 74 der zweiten bzw. dritten Spalte zum Leuchten gebracht, usw. Die Ansteuerung der Leuchtdioden nach Maßgabe der aufeinanderfolgenden 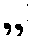 Spalten" von Bits ist durch Block 76 dargestellt.

Außerdem werden die digitalen Meßwerte ( 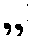 150") in eine andere Form von digitaler Darstellung umgesetzt und für das Feld 40 gespeichert. Das kann in Form einer einfachen binäre Darstellung oder in Form von ASCII-Codes der einzelnen Ziffern erfolgen. Im letzteren Fall wäre keine Umwandlung erforderlich, wenn man annimmt, daß der Analog-Digital-Wandler den Meßwert schon in ASCII-Code liefert. Vorzugsweise wird der Meßwert redundant gewandelt und gespeichert, so daß Lesefehler erkennbar sind. Zu diesem Zweck kann der Meßwert in verschiedenem Format gespeichert werden, beispielsweise als Binärzahl und im ASCII-Code. Diese redundante Wandlung und Speicherung ist durch Block 78 in Fig.4 dargestellt. Das auf diese Weise -wieder als Matrix von binären Zuständen- gespeicherte Muster ist schematisch bei 80 in Fig.4 dargestellt. Wie bei den Zeichen von Feld 38 wird das Muster von Feld 40 spaltenweise abgetastet. Das ist durch Block 82 dargestellt. Die so erhaltenen 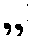 Spalten" sind schematisch bei 84 gezeigt. Nach dem Aufbringen der Zeichen auf den Rand 16 des Films 18 wird das Muster 80 in gleicher Weise spaltenweise aufgebracht.

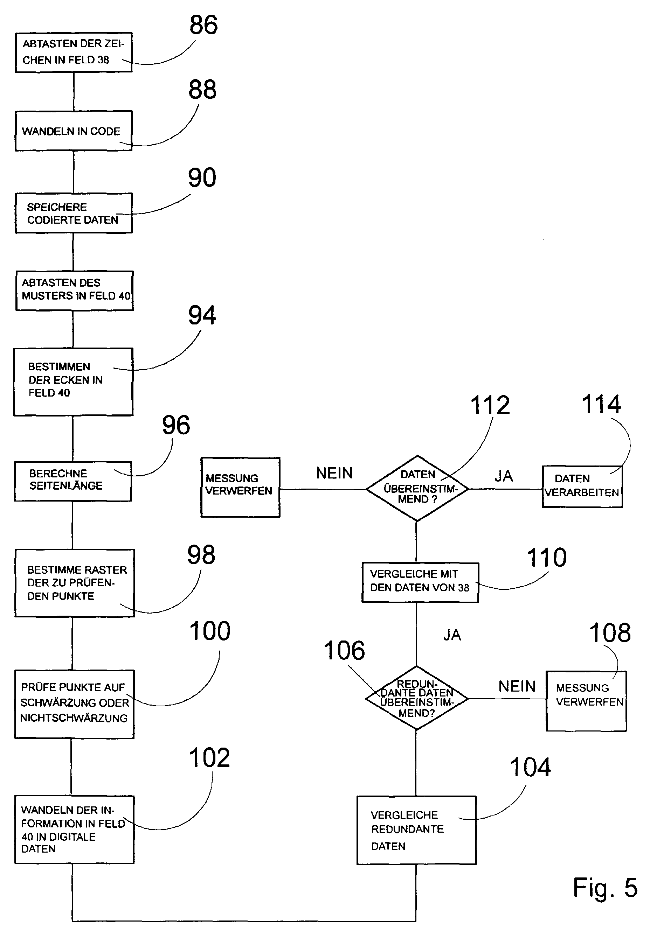

Fig.5 zeigt das Vorgehen, wenn die Datendarstellung auf dem Rand 16 des Films 18 gelesen wird.

Zunächst werden die Spalten des Feldes 38 gelesen. Das ist durch Block 86 in Fig.5 dargestellt. Das liefert die Schrift in Feld 38 in Form einer Matrix von binären Zuständen. Diese Matrix wird in codierte Daten, z.B. im ASCII-Code umgesetzt. Das ist durch Block 88 in Fig.5 dargestellt. Die codierten Daten werden gespeichert, wie durch Block 90 dargestellt ist.

Der nächste Schrift ist die Abtastung und Speicherung des Musters in Feld 40. Das ist durch einen Block 92 in Fig.5 dargestellt. Die Ecken des Feldes 40 werden bestimmt. Jede dieser Ecken ist gekennzeichnet durch drei geschwärzte Punkte, die einen rechten Winkel bilden, wie in Fig.2 dargestellt ist. Die Bestimmung der Ecken ist durch Block 94 dargestellt. Aus den auf diese Weise bestimmten Ecken werden die Seitenlängen des Rechtecks von Feld 40 berechnet. Das ist durch Block 96 dargestellt. Aus den Seitenlängen wird ein Raster von Punkten berechnet, die auf Schwärzung oder Nichtschwärzung zu prüfen sind. Diese Rechnung, die oben schon umrissen wurde, ist durch Block 98 dargestellt. Es folgt ein Test, welche dieser Punkte geschwärzt sind und welche nicht geschwärzt sind. Dieser Test ist durch Block 100 dargestellt. Aus der Auswertung des Musters werden Informationen über die Meßdaten erhalten und in digitale Daten umgesetzt. Vorzugsweise geschieht das spaltenweise, wobei jede Spalte eine Information wie Geschwindigkeit als Binärzahl oder den Wert einer Stelle als ASCII-Code enthält. Die Daten werden dabei redundant erhalten. Das ist durch Block 102 in Fig.5 dargestellt. Die so redundant erhaltenen Daten werden miteinander Verglichen, wie durch Block 104 dargestellt ist. Der Vergleich wird gemäß Rhombus 106 ausgewertet: Wenn die redundant erhaltenen Daten nicht übereinstimmen ( 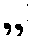 Nein"), wird die gesamte Messung verworfen. Das ist durch Block 108 dargestellt.

Wenn die redundanten Daten übereinstimmen ( 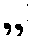 Ja"), werden sie mit den von Feld 38 erhaltenen codierten Daten verglichen. Das ist durch Block 110 dargestellt. Ein Rhombus 112 stellt eine Prüfung dar, ob die redundanten Daten von Feld 40 mit den codierten Daten von Feld 38 übereinstimmen oder nicht. Wenn die Daten übereinstimmen ( 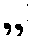 Ja"), werden die Daten weiterverarbeitet, wie durch Block 114 dargestellt ist. Wenn die Daten nicht übereinstimmen ( 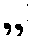 Nein"), wird die Messung verworfen, wie durch Block 116 dargestellt ist.

## Patentansprüche

1. Verfahren zum Aufbringen von Daten auf einem photographischen Film, insbesondere von Zeit- und/oder Meßdaten bei photographischen Verkehrsüberwachungs-Anlagen, in einer durch ein Lesegerät zur Verarbeitung in einen Rechner lesbaren Form, **dadurch gekennzeichnet, daß** auf dem photographischen Film (18) zusätzlich zu einer alphanumerischen Darstellung (38) der Daten ein Feld (40) aufgebracht wird, in welchem die Daten in einer durch das Lesegerät und den Rechner vereinfacht lesbaren Form dargestellt ist.

2. Verfahren nach Anspruch 1, **dadurch gekennzeichnet, daß** die alphanumerische Darstellung (38) und das zusätzliche Feld (40) durch einen optischen Schreibkopf (14) während des Filmtransports photographisch auf den Film (18) aufgebracht werden.

3. Verfahren nach Anspruch 1 oder 2, **dadurch gekennzeichnet, daß**
(a) in dem zusätzlichen Feld (40) Punkte definiert sind, deren photographische Schwärzung oder Nichtschwärzung datenabhängige Information beinhaltet, und
(b) der optische Schreibkopf (14) diese Punkte nach Maßgabe der aufgebrachten Daten belichtet oder nicht belichtet.

4. Verfahren nach Anspruch 3, **dadurch gekennzeichnet, daß** die Daten in dem zusätzlichen Feld (40) durch geschwärzte Punkte mehrfach-redundant dargestellt werden.

5. Verfahren nach Anspruch 3 oder 4, dadurch gekennzeichnet, daß das zusätzliche Feld (40) rechteckig mit einem Paar von zur Richtung (28) des Filmtransports parallelen Seitenund einem Paar zur Richtung des Filmtransports (28) senkrechten Seiten ist.

6. Verfahren nach Anspruch 5, dadurch gekennzeichnet, daß mindestens zwei, in der Richtung des Filmtransports hintereinanderliegende Ecken des Rechtecks gesondert, unabhängig von den aufgebrachten Daten markiert werden.

7. Verfahren zum Lesen von Daten, die nach dem Verfahren nach Anspruch 6 in einem zusätzlichen, rechteckigen Feld (40) auf einem Film (18) aufgebracht sind, gekennzeichnet durch die Verfahrensschritte:
(a) Bestimmen wenigstens einer Seitenlänge des Rechtecks aus dem Abstand der markierten Ecken des Rechtecks,
(b) Bestimmen der Koordinaten der in dem Feld definierten Punkte anhand der so bestimmten Seitenlänge und
(c) Bestimmen des "Geschwärzt"- oder "Nicht-geschwärzt"-Zustandes an den durch die so bestimmten Koordinaten festgelegten Stellen.
